# DEMANDE DE BREVET EUROPEEN

(11) **EP 1 088 798 A1**
(43) Date de publication de la demande: **04.04.2001**
(21) Numéro de dépôt: 00402700.9
(22) Date de dépôt: 29.09.2000
(51) Int. Cl.: C04B 26/26, E01C 7/24, E01C 7/26, C04B 14/02, C04B 14/42, C08L 95/00, C08J 5/04

(54) **Composé destiné à retarder la propagation des fissures dans les chaussées, procédé et couche résultants**

(30) Priorité: 01.10.1999 FR 9912314
(71) Demandeur: COLAS, 92653 Boulogne-Billancourt Cédex (FR)
(72) Inventeur: Chambon, Alain, 69390 Vourles (FR)
(74) Mandataire: Michelet, Alain

(57) **Abrégé**

Composé destiné à retarder la propagation des fissures dans les chaussées caractérisé en ce qu'il est un enrobé coulé à froid comportant une émulsion bitumineuse élastomérique, des granulats et des fibres, les granulats résultant du mélange d'au moins deux gammes exclusives de taille de granulats, les granulats de la gamme de taille la plus faible étant choisis parmi les granulats 0/2 ou 0/4, et les fibres étant des fibres de verre.

## Description

La présente invention concerne un composé destiné à retarder la propagation des fissures dans les chaussées. Elle a des applications en génie civil ou militaire et plus particulièrement dans la réalisation et l'entretien des chaussées ou voies de circulation. Un procédé de réalisation du composé ainsi qu'une couche résultant de l'application du composé sont revendiqués.

Une chaussée de circulation comporte généralement plusieurs couches de matériaux, dont une couche de roulement, placées sur un sol et qui sont destinées à assurer la stabilité de la chaussée en répartissant les charges que la chaussée supporte. Les charges produisant des contraintes mécaniques peuvent produire des dégradations de la chaussée sous forme de déformations et/ou de fissurations. Des contraintes environnementales peuvent aussi entraîner des dégradations de la chaussée. Ces contraintes environnementales sont principalement dues à l'eau par son effet sur le sol et/ou sur la chaussée. Il est donc important d'éviter les infiltrations d'eau dans le sol et à travers la chaussée par drainage et réalisation d'une ou plusieurs couches supérieures de chaussée sensiblement étanches et résistant à la fissuration.

Les fissures de chaussée peuvent aussi être liées à son mode de réalisation. Une chaussée peut ainsi comporter des couches en graves hydrauliques qui peuvent présenter des fissures de retrait lors de son séchage.

Les fissures ont généralement tendance à se propager à travers l'épaisseur de la chaussée. Ces fissures de diverses origines entraînent une dégradation accélérée à cause de l'eau qui s'infiltre dans le corps de la chaussée. Afin d'éviter ces phénomènes de dégradation accélérée, il faut empêcher l'eau de pénétrer dans le corps de la chaussée en bouchant les fissures par un traitement curatif.

Dans le domaine préventif, il est aussi utile d'éviter que des fissures apparaissant dans les matériaux d'une des couches de la chaussée ne puisse se propager à travers le corps de chaussée.

Les techniques préventives et curatives connues contre les fissures sont multiples. Elles consistent à créer un écran entre les couches de matériau composant la chaussée afin d'empêcher les fissures de se propager dans l'épaisseur de la chaussée et à travers les différentes couches. Cet écran peut être à base de sable enrobé fortement dosé en liant modifié. L'écran peut consister en une membrane bitumineuse ou une membrane de fibres synthétiques imprégnée de bitume appliquée *in situ.* Il est aussi possible de réaliser un écran avec du bitume chargé de fibres de verre. Il est encore possible d'utiliser une grille métallique à l'interface de la couche de roulement. Ces techniques connues empêchent ou retardent plus ou moins bien la propagation des fissures dans l'épaisseur de la chaussée. Afin de comparer ces techniques, il est possible d'effectuer des essais comparatifs de résistance à la propagation des fissures. En général, la résistance est directement fonction du coût de la technique concernée.

La présente invention propose ainsi une technique alternative permettant de réaliser un écran s'opposant à la propagation des fissures à travers la chaussée. L'invention concerne donc un composé destiné à retarder la propagation des fissures dans les chaussées.

Selon l'invention le composé est un enrobé coulé à froid comportant une émulsion bitumineuse élastomérique, des granulats et des fibres, les granulats résultant du mélange d'au moins deux gammes exclusives de taille de granulats, les granulats de la gamme de taille la plus faible étant choisis parmi les granulats 0/2 ou 0/4, et les fibres étant des fibres de verre.

Dans divers modes de mise en oeuvre de l'invention les moyens suivants pouvant être utilisés seuls ou combinés selon toutes les possibilités techniquement possibles sont mis en oeuvre:
- les granulats résultent d'un mélange choisi parmi les mélanges:
   - 0/2 + 2/4;
   - 0/4 + 4/6;
   - 0/2 + 4/6,
   - 0/4 + 4/10,
   - 0/4 + 4/6 + 6/10,
   - 0/4 + 6/10
- les fibres de verre ont un diamètre compris entre 5 et 15 micromètres et préférentiellement approximativement de 12 micromètres pour une longueur comprise entre 6,4 et 50,8 millimètres (1/4 et 2 pouces) et préférentiellement approximativement de 12,7 millimètres (1/2 pouce),
- les fibres sont obtenues par découpage de brins de fibres de verre.

L'invention concerne également un procédé de réalisation d'un composé destiné à retarder la propagation des fissures dans les chaussées.

Selon l'invention de procédé, on introduit les fibres de verre dans les granulats avant l'introduction de l'émulsion bitumineuse élastomérique.

Dans une variante de mise en oeuvre du procédé, on introduit les fibres de verre dans les granulats de la gamme de taille la plus faible avant l'introduction des granulats des autres gammes de taille et de l'émulsion bitumineuse élastomérique. Dans ce dernier mode, on mélange donc les fibres de verre avec les granulats de la gamme de taille la plus faible avant soit l'introduction de l'émulsion bitumineuse élastomérique comportant éventuellement des granulats des autres gammes de taille, soit avant l'introduction des granulats des autres gammes de taille, l'émulsion élastomérique étant ultérieurement introduite. Cependant, le mode préféré de mise en oeuvre consiste à introduire les fibres en même temps que tous les granulats et donc avant l'émulsion. En effet, l'émulsion peut être introduite ultérieurement, les granulats + fibres ayant été stockés ou transportés entre temps.

L'invention concerne enfin une couche destinée à retarder la propagation des fissures dans les chaussées. Cette couche résulte d'au moins une application d'un composé selon l'une quelconque ou plusieurs des caractéristiques précédentes, chaque application apportant entre 40 et 60 grammes de fibres par mètre carré et préférentiellement environ 50 grammes de fibres par mètre carré.

La combinaison de l'émulsion bitumineuse élastomérique, des granulats et des fibres de verre permet d'obtenir une résistance améliorée à la propagation des fissures pour un coût réduit grâce à l'étanchéité, l'élasticité et la résistance à la traction qu'elle apporte.

La présente invention sera mieux comprise à la lecture d'un exemple de mise en oeuvre où:
- la Figure 1 représente en coupe une chaussée;
- la Figure 2 une installation de préparation des composants;
- la Figure 3 un dispositif de découpe des brins de fibre de verre.

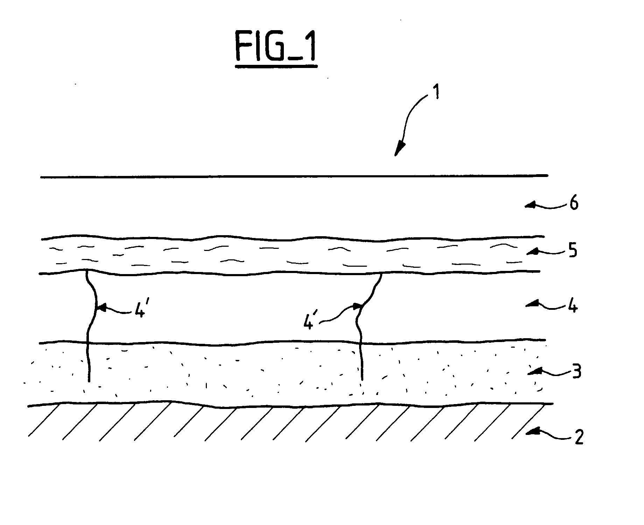

La chaussée 1 représentée sur la Figure 1 comporte quatre couches de matériaux disposés sur un sol 2. Une première sous-couche 3 de grave hydraulique ou autres matériaux assure l'interface avec le sol 2. Sur cette sous-couche 3 est disposé un revêtement existant 4 présentant des fissures 4'. L'épaisseur du revêtement 4 peut être de 4 à 6 cm. Lors d'une opération de rénovation de la chaussée, une couche 5 du composé selon l'invention a été répandue sur la couche 4 fissurée. La couche 5 résulte de deux applications du composé selon l'invention pour une épaisseur d'environ 10 à 15 mm. Une couche d'enrobés 6 a ensuite été appliquée sur la couche 5 du composé pour une épaisseur d'environ 3,5 à 4,5 mm . Dans le cas de la rénovation d'une chaussée soumise à de faibles contraintes de circulation, la couche d'enrobés 6 peut être omise. Cet exemple est donné à titre purement illustratif et concerne une rénovation de chaussée.

Il est aussi possible d'utiliser l'invention à titre préventif lors de la réalisation d'une nouvelle chaussée, une couche du composé résultant d'une ou plusieurs applications étant réalisée sous la couche d'enrobés de bande de roulement et, à tout le moins, sur la couche de chaussée qui présente le risque le plus important de se fissurer.

Le composé de l'invention est un enrobé coulé à froid qui est réalisé *in situ* (sur le chantier) et est mis en oeuvre pratiquement immédiatement. Afin d'assurer l'homogénéité de la répartition des fibres dans le composé, les fibres de verre doivent être introduites avec les granulats avant l'introduction du liant bitumineux élastomérique. On utilise préférentiellement des brins de fibres de verre qui sont découpés. Dans le cas de granulats résultant du mélange de deux gammes exclusives de taille 0/2 et 2/4, on répand environ 9 kg/m² de produit par application afin d'obtenir un poids de 50 g de fibre par m². Dans un mode préféré de réalisation, on procède à deux applications du composé.
Un essai appelé " essai de retrait flexion " a été réalisé afin d'évaluer la résistance à la propagation des fissures du composé. Cet essai donne un résultat " r ", valeur de temps réduit, qui permet de classer les produits entre eux. Un essai réalisé avec le composé de l'invention a donné r = 1,6, ce qui correspond à une résistance très importante à la propagation des fissures. Une telle valeur place le composé parmi les techniques connues les plus performantes. Cependant le coût de mise en oeuvre du composé est moindre et il présente donc un rapport qualité/prix meilleur que les techniques connues.

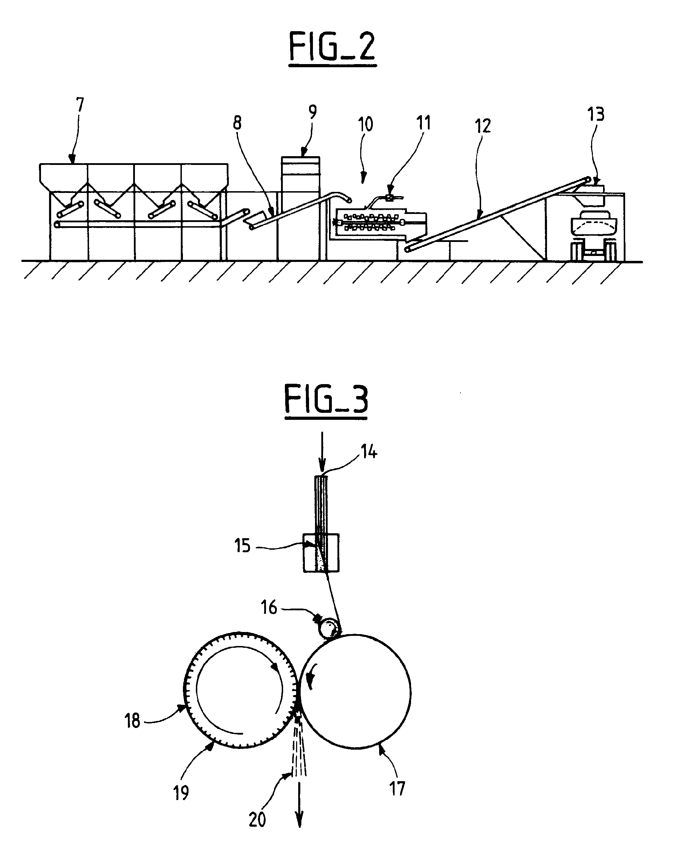

Le composé peut être mis en oeuvre avec le matériel traditionnel de cette technique ainsi que représenté figure 2. L'installation comporte un doseur de granulats 7, un tapis transporteur 8, un coupeur de fibres 9, un malaxeur 10. De l'eau peut être introduite dans le malaxeur par une conduite 11 comportant une vanne de dosage. Un tapis transporteur 12 permet d'amener le mélange de granulats et fibres à une trémie de chargement 13. Il est aussi envisagé que la réalisation du composé s'effectue dans un dispositif tracté ou automoteur comportant des réserves pour les différents constituants, des vannes et des organes de découpage des fibres et de malaxage, le tout étant commandé par des moyens de contrôle informatiques.

Le dispositif permettant la découpe des brins de fibre de verre est schématisé sur la figure 3. Les brins 14 sont guidés par un guide de fibre mobile 15 vers un moyen d'entraînement comportant un rouleau presseur 16 sur un cylindre 17 en élastomère. Les brins sont découpés en fibres 20 par un cylindre porte-lames 18 comportant des lames 19. Les différents cylindres sont entraînés en rotation afin de permettre la découpe des brins.

## Revendications

1. Composé destiné à retarder la propagation des fissures dans les chaussées, ledit composé étant un enrobé coulé à froid comportant une émulsion bitumineuse, des granulats 0/D et des fibres de verre, les fibres de verre étant obtenues par découpage de brins de fibres de verre, caractérisé en ce que l'émulsion bitumineuse est une émulsion bitumineuse élastomérique et que les granulats résultent du mélange d'au moins deux gammes exclusives de taille de granulats, les granulats de la gamme de taille la plus faible étant choisis parmi les granulats 0/2 ou 0/4, le mélange étant choisi parmi les mélanges:
- 0/2 + 2/4;
- 0/4 + 4/6;
- 0/2 + 4/6,
- 0/4 + 4/10,
- 0/4 + 4/6 + 6/10,
- 0/4 + 6/10.

2. Composé selon la revendication 1 caractérisé en ce que les fibres de verre ont un diamètre compris entre 5 et 15 micromètres et préférentiellement approximativement de 12 micromètres pour une longueur comprise entre 6,4 et 50,8 millimètres (1/4 pouce et 2 pouces) et préférentiellement approximativement de 12,7 millimètres (1/2 pouce).

3. Procédé de réalisation d'un composé destiné à retarder la propagation des fissures dans les chaussées, ledit composé étant un enrobé coulé à froid comportant une émulsion bitumineuse, des granulats 0/D et des fibres de verre, les fibres de verre étant obtenues par découpage de brins de fibres de verre, caractérisé en ce que pour le composé de l'une quelconque des revendications précédentes, on introduit les fibres de verre dans les granulats avant l'introduction de l'émulsion bitumineuse élastomérique.

4. Procédé de réalisation d'un composé selon la revendication 3, caractérisé en ce que l'on introduit les fibres de verre dans l'ensemble des granulats avant l'introduction de l'émulsion bitumineuse élastomérique.
